# FASCICULE DE BREVET EUROPEEN

(11) **EP 1 909 219 B1**
(45) Date de publication et mention de la délivrance du brevet: **08.08.2012**
(21) Numéro de dépôt: 08100117.4
(22) Date de dépôt: 11.05.2000
(51) Int. Cl.: G06K 19/077

(54) **Adaptateur pour une carte à puce, d'un format réduit par rapport au format standard d'une mini-carte SIM**
Adapter für Chipkarten mit einem kleineren Format als dem einer Standard Mini Sim-Karte
Adapter for a chip card having a reduced format compared to the standard SIM mini-card format

(30) Priorité: 27.05.1999 FR 9906729
(43) Date de publication de la demande: 09.04.2008
(62) Demande divisionnaire de: 00925435.0
(73) Titulaire: Gemalto SA, 92190 Meudon (FR)
(72) Inventeur: Boccia, Henri, 13720 Belcodene (FR); Brunet, Olivier, 13012 Marseille (FR); Limousin, Isabelle, 13100 Aix en Provence (FR); Patrice, Philippe, 13190 Allauch (FR)

(56) Documents cités:
- WO-A-00/49567
- DE-A1- 4 132 720
- DE-C1- 19 703 122
- DE-U1- 29 503 249
- FR-A- 2 743 649

## Description

La présente invention concerne un adaptateur pour dispositif électronique portable, de type carte à puce, d'un format inférieur au format standard actuel et plus particulièrement au format standard actuel des mini-cartes.

L'invention se rapporte également au procédé de fabrication de l'adaptateur selon la présente invention.

Il existe principalement deux formats standards de carte à puce sur le marché. D'une part les cartes à puce respectant la norme ISO, essentiellement destinées à des opérations de communication, d'identification, ou de télébilletique par exemple, et d'autre part des cartes à puce respectant la norme dite mini-SIM, essentiellement destinées à être insérées dans un téléphone mobile de la norme GSM par exemple (Général Standard Mobile).

La présente invention concerne plus particulièrement le domaine des mini-cartes pour une application de téléphonie mobile.

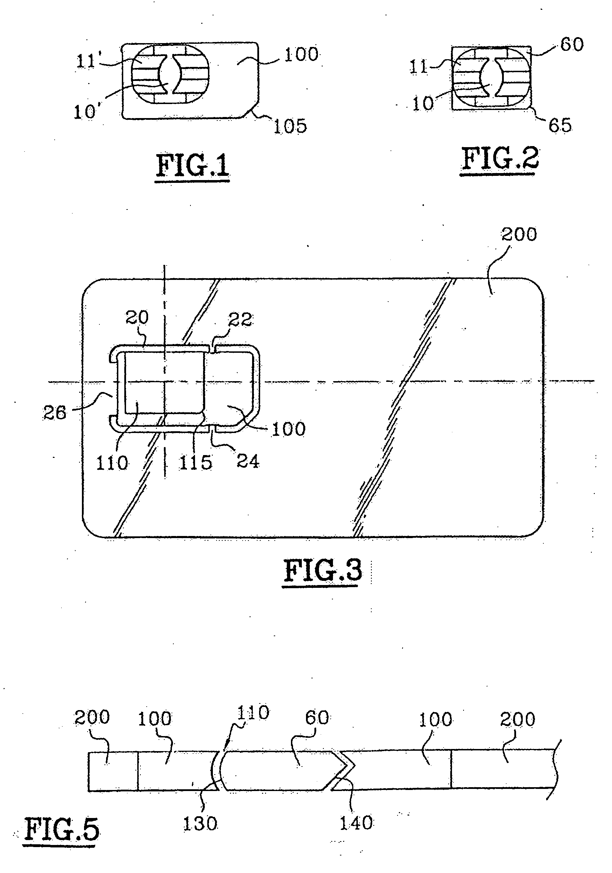

Une mini-carte au format standard actuel est illustrée schématiquement, vue de dessus, sur la figure 1.

Une telle mini-carte constitue une carte à puce à contact comportant un support 100, réalisé par moulage ou injection de matière plastique, et un microcircuit 10' reporté sur ledit support 100 avec des plages de métallisation 11' affleurant la surface du support 100 de manière à permettre un raccordement électrique de la puce du microcircuit 10' avec un circuit d'exploitation, par exemple, le circuit électronique du téléphone mobile.

Ces mini-cartes actuelles respectent une norme internationale établie qui fixe leurs dimensions afin de permettre leur utilisation avec n'importe quel téléphone mobile respectant la même norme. En particulier, les mini-cartes ont un corps de carte 100 de forme rectangulaire de 15mm par 25mm avec une épaisseur de 760 m, et présentent un détrompeur 105, de 3mm par 3mm, sur le coin inférieur droit du support 100 de la carte.

Le microcircuit 10' est situé à un emplacement précis sur le support 100 de la mini-carte afin de permettre une connexion électrique normalisée avec les connecteurs des téléphones de la norme.

Préférentiellement, le microcircuit 10' a été placé dans une cavité préalablement ménagée dans le support 100 de la mini-carte. La cavité peut être réalisée par usinage ou lors de l'injection de plastique dans le moule de la carte, par exemple, ou par une quelconque autre technique bien connue.

De même, l'encartage, ou le report, du microcircuit 10' dans cette cavité est réalisé par pressage à chaud ou par collage, par exemple, ou par tout autre moyen, selon des techniques également bien connues de l'homme du métier.

Ainsi, le microcircuit 10' est situé à un emplacement précis du support 100 défini par la norme mini-SIM, qui fixe cet emplacement sur le coin opposé au détrompeur, soit le coin supérieur gauche, à 1,5mm du bord supérieur et à 4mm du bord gauche.

On connaît un système permettant à un support défini par la norme mini-SIM de pouvoir être utilisé dans un lecteur de carte à puce respectant la norme ISO, ce système pouvant être la réalisation, dans le support au format ISO, soit d'éléments affaiblis présentant une zone de rupture préférentielle, tels qu'une fente discontinue interrompue par des brettelles ou une rainure continue, délimitant le support au format mini-SIM (comme divulgué dans les demandes de brevet EP 638 873, DE 41 32 720 et EP 521 778), soit d'une cavité traversante dont le contour est conformé de façon à coopérer avec un contour complémentaire du support au format mini-SIM et permettre ainsi leur solidarisation (comme divulgué dans les demandes DE 295 03 249 U et DE 197 03 122).

La présente invention se rapporte à un adaptateur permettant d'adapter un dispositif électronique portable, de type carte à puce, d'un nouveau format sur une carte d'un format standard, ISO ou mini-SIM, le format de ce dispositif étant inférieur au format standard mini-SIM.

En effet, dans le cadre d'une normalisation de téléphones mobiles de la troisième génération de la norme GSM, un nouveau format de mini-carte est proposé.

Ces nouvelles mini-cartes d'un nouveau format sont dénommées ci-après PLUG 3G.

Néanmoins il est avantageux de permettre aux anciens téléphones mobiles encore sur le marché de fonctionner avec des cartes de la nouvelle génération.

On connaît d'après la demande de brevet WO 00/49567 un adaptateur qui permette l'utilisation d'une carte PLUG 3G avec un appareil dont le lecteur est destiné à recevoir une carte ISO ou mini-SIM de la précédente génération. Cet adaptateur comprend un premier support qui a les dimensions d'un corps de carte à puce au format ISO dans lequel est réalisé une cavité non traversante adaptée à recevoir un second support au format mini-SIM dans lequel est également réalisé une cavité non traversante adaptée à recevoir la carte PLUG 3G. Cependant, du fait de la différence d'épaisseur du premier support au format ISO, du second support au format mini-SIM et de la carte PLUG 3G, si l'un de ces trois éléments ait une épaisseur conforme à la norme, chaque autre élément est soit trop mince pour avoir un contact électrique de bonne qualité, soit trop épais et peut endommager les contacteurs du lecteur.

La présente invention vise à réaliser un adaptateur permettant l'utilisation directe d'une carte PLUG 3G sur des appareils destinés à recevoir des cartes mini-SIM ou ISO actuelles sans avoir les inconvénients précités.

Selon un premier aspect, la présente invention se rapporte plus particulièrement à un adaptateur pour une carte à puce, la carte à puce ayant des dimensions réduites en longueur et en largeur par rapport aux dimensions d'une carte à puce au format mini-SIM et comprenant un microcircuit présentant des plages de contact, l'adaptateur comprenant :
- un premier support
   - qui a les dimensions d'un corps de carte à puce au format mini-SIM et
   - qui est muni d'une cavité
      - ayant des dimensions aptes à recevoir la carte à puce au format réduit et
      - localisée sur le premier support à une position telle que l'emplacement des plages de contact de la carte à puce au format réduit reportée dans la cavité coïncide avec celui des plages de contact d'une carte à puce au format mini-SIM afin de permettre l'établissement d'un contact électrique entre la carte à puce au format réduit et un circuit d'exploitation extérieur pour cartes à puce au format mini-SIM, et
- un second support qui a les dimensions d'un corps de carte à puce au format ISO,
caractérisé en ce que la cavité est percée dans toute l'épaisseur du premier support et présente une forme dissylétrique complémentaire de la forme dissymétrique de la carte à puce au format réduit permettant à cette dernière d'y être maintenue par son pincement entre les parois de la cavité, et
en ce que le premier support définit une portion interne du second support délimitée par une prédécoupe
- qui se présente sous la forme d'une fente discontinue interrompue par des bretelles dont la rupture permet la séparation du premier support, et
- qui est localisée sur le second support à une position telle que l'emplacement de plages de contact de la carte à puce au format réduit reportée dans la cavité du premier support relié au second support par les bretelles coïncide avec celui des plages de contact d'une carte à puce au format ISO afin de permettre l'établissement d'un contact électrique entre la carte à puce au format réduit (60) et un circuit d'exploitation extérieur pour cartes à puce au format ISO.

Selon une première variante, la cavité comporte au moins une paroi concave.

Selon une seconde variante, la cavité est adaptée pour une carte à puce au format PLUG 3G.

Selon un second aspect, l'invention se rapporte à un système de carte à puce comprenant, d'une part un adaptateur conforme au premier aspect de la présente invention, et, d'autre part, maintenue dans la cavité, une carte à puce au format réduit ayant une épaisseur conforme à celle d'une carte à puce au format mini-SIM ou ISO.

Selon un troisième aspect, la présente invention concerne également un procédé de fabrication d'un adaptateur, comprenant les étapes suivantes :
- réalisation d'un support ayant les dimensions d'un corps de carte à puce au format ISO,
- réalisation, dans le support, d'une délimitation d'une portion interne aux dimensions d'un corps de carte à puce au format mini-SIM, et
- réalisation, dans la portion interne, d'une cavité aux dimensions d'une carte à puce ayant des dimensions réduites en longueur et en largeur par rapport aux dimensions d'une carte à puce au format mini-SIM,
la cavité étant localisée sur le support à une position telle que, lorsqu'une carte à puce au format réduit est reportée dans la cavité, l'emplacement des plages de contact de la carte à puce au format réduit coïncide avec celui des plages de contact d'une carte à puce au format ISO, et
la délimitation de la portion interne étant localisée sur le support à une position telle que, lorsque la portion interne est séparée du support, l'emplacement des plages de contact d'une carte à puce au format réduit reportée dans la cavité coïncide avec celui des plages de contact d'une carte à puce au format mini-SIM,
caractérisé en ce que la délimitation de la portion interne dans le support est réalisée par une prédécoupe ayant la forme d'une fente discontinue interrompue par des bretelles, et en ce que la cavité est percée dans toute l'épaisseur de la portion interne.

Selon un mode de réalisation préférentiel, le support est obtenu par moulage et la prédécoupe est réalisée lors du moulage.

Selon un quatrième aspect, l'invention se rapporte à un procédé de fabrication d'un système de carte à puce, caractérisé en ce qu'il comprend les étapes suivantes :
- réalisation d'une carte à puce au format réduit par rapport à une carte à puce au format au format mini-SIM,
- réalisation d'un adaptateur selon un procédé conforme au troisième aspect de la présente invention,
- report de la carte à puce au format réduit dans la cavité de l'adaptateur.

La présente invention permet d'obtenir, avec un procédé simple, un adaptateur universel permettant l'utilisation directe d'une carte PLUG 3G sur des appareils destinés à recevoir des cartes mini-SIM ou ISO actuelles.

Ainsi l'évolution de la norme ne fermera pas le marché des nouvelles cartes aux anciens appareils, tels que les téléphones mobiles par exemple.

D'autres particularités et avantages de l'invention apparaîtront à la lecture de la description qui suit donnée à titre d'exemple illustratif et non limitatif est faite en référence aux figures annexées pour lesquelles :
la figure 1, déjà décrite, est une vue schématique de dessus d'une carte mini-SIM au format standard actuel des mini-cartes,
la figure 2 est une vue schématique de dessus d'un dispositif électronique portable d'un format réduit par rapport au format standard ;
la figure 3 est une vue de dessus du principe de l'adaptateur universel selon la présente invention ;
   - la figure 4 est une vue de dessus du principe de l'adaptateur universel avec report du dispositif au format réduit ;
   - la figure 5 est une vue en coupe d'un mode de réalisation de l'adaptateur selon la présente invention.

En se référant à la figure 2, le dispositif au format réduit par rapport au format standard d'une mini-carte présente un corps de carte 60 de forme rectangulaire dont les dimensions sont inférieures aux dimensions des formats connus. Ce dispositif est dénommé ci-après PLUG 3G.

Par exemple, le corps de carte 60 présente une longueur de 15mm et une largeur de 10mm par exemple avec une épaisseur inférieure ou égale à 760µm et présente un détrompeur 65 de 1mm par 1mm sur le coin inférieur droit de la carte.

Comme sur les mini-cartes au format standard mini-SIM, un microcircuit 10 est intégré dans une cavité ménagée dans le corps 60 de la carte PLUG 3G, ce microcircuit 10 couvrant la quasi totalité de la surface de la carte PLUG 36. Plus précisément, il se situe à environ 0,5mm du bord de chaque côté de la carte.

Le microcircuit 10 présente également des plages de métallisation 11 qui définissent les plages de contact de la puce du microcircuit 10. Ces plages de contact 11 sont destinées à établir un contact électrique entre la puce du microcircuit 10 et un circuit d'exploitation.

Le circuit d'exploitation, intégré dans le téléphone mobile par exemple, est conçu pour lire les données portées par la carte et les exploiter. Il est pourvu d'un connecteur dans lequel l'utilisateur insère la carte. Ce connecteur comprend une série de lames de contact destinée à venir en appui sur les plages de contact 11 du microcircuit 10 de la carte lorsque celle ci est correctement insérée dans le connecteur. Il est par conséquent indispensable, pour que la connexion électrique soit bien établie, que la norme définisse précisément la position du microcircuit 10, et de ses plages de contact 11, par rapport aux rebords du support de la carte.

Afin de permettre l'utilisation de cette mini-carte PLUG 3G au nouveau format avec un téléphone dont le connecteur est conçu pour lire une carte au format standard actuel, mini-SIM ou ISO, il est nécessaire de placer cette mini-carte PLUG 3G sur un adaptateur qui permettra de réaliser une correspondance entre les plages de contact 11 du microcircuit 10 et les lames de contact du connecteur.

La présente invention consiste donc à réaliser un adaptateur universel qui permette d'utiliser le dispositif au format réduit sur un support au format d'une carte ISO, et/ou sur une carte au format mini-SIM.

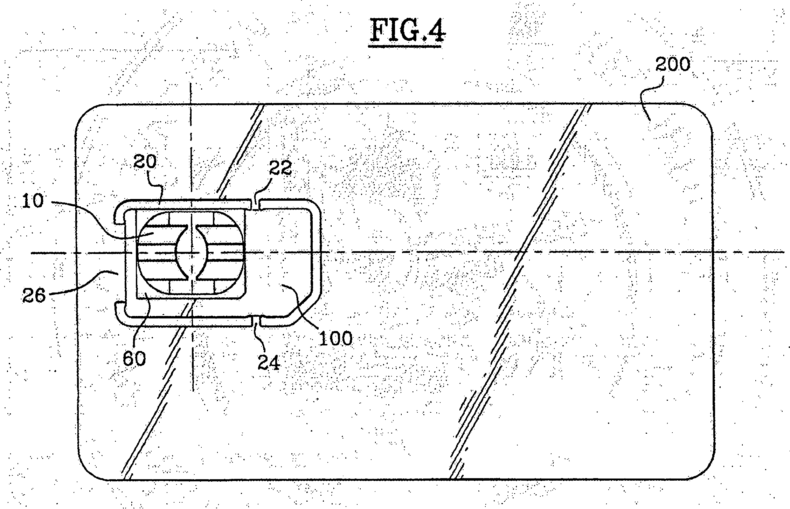

Un tel adaptateur universel est illustré, vue de dessus sur les figures 3 et 4.

L'adaptateur universel selon l'invention comprend un support 200 aux dimensions d'un corps de carte au format standard d'une carte ISO, soit un support de 85mm par 54mm. Ce support 200 peut être réalisé selon des techniques classiques, par moulage par exemple.

Une prédécoupe 20 est réalisée autour d'une portion interne 100 au support 200. Cette portion interne 100 présente les dimensions d'un corps de carte au format standard d'une mini-carte, soit une portion 100 de 25mm par 15mm, avec un détrompeur 105 de 3mm par 3mm sur le coin inférieur droit.

Cette prédécoupe 20 est prévue de manière à permettre la séparation facile de la portion interne 100 avec le support 200 afin d'obtenir un support au format mini-SIM. Elle peut avantageusement être réalisée par moulage en même temps que le support 200.

Selon un mode de réalisation préférentiel, la prédécoupe se présente sous la forme d'une fente discontinue 20 interrompue de manière à créer des bretelles 22, 24, 26 qui permettent à la portion interne 100 de rester solidaire du support 200. Un support de format mini-SIM peut ainsi être obtenu en provoquant la rupture desdites bretelles par simple pression sur la portion interne 100.

Une cavité 110 est alors ménagée dans le support 100, définissant la portion interne du deuxième support 200, cette cavité 110 présentant des dimensions correspondantes à celles du dispositif électronique à adapter, c'est à dire aux dimensions de la mini-carte PLUG 3G, soit 15mm par 10mm, avec un détrompeur 115 de 1mm par 1mm sur le coin inférieur droit.

La cavité 110 peut être réalisée par moulage ou par injection lors de la réalisation du support 200, ou par usinage. Ces techniques sont bien connues par les fabricants de cartes à puce.

La mini-carte PLUG 3G 60 peut alors être reportée dans cette cavité 110 et maintenue par des moyens de fixation tels que le pincement par exemple. Les différents moyens de fixation de la mini- carte PLUG 3G 60 dans la cavité 110 seront décrits ultérieurement en référence aux différents modes de réalisation.

Préférentiellement, les moyens de fixation de la mini-carte PLUG 3G sont amovibles afin de permettre l'utilisation directe du dispositif au format réduit sans adaptateur.

La cavité 110 accueillant la mini-carte PLUG 3G 60 se situe respectivement dans les supports 100 et 200 de manière à respecter la contrainte, exposée précédemment, du positionnement des plages de contact 11 du microcircuit 10 de la mini- carte 60 vis à vis des lames de contact du connecteur, afin que le contact électrique puisse être établi entre le microcircuit 10 de la mini-carte PLUG 3G 60 et le circuit d'exploitation d'un appareil tel qu'un téléphone par exemple.

On obtient ainsi un adaptateur universel qui permet l'utilisation de la carte PLUG 3G, soit directement dans un lecteur apte à recevoir une carte au format ISO, soit indirectement dans un lecteur apte à recevoir une carte au format mini-SIM après rupture des bretelles 22,24,26 retenant la portion de support 100.

La figure 5 illustre un mode de réalisation de l'adaptateur selon l'invention, et plus particulièrement un mode de réalisation de la cavité et de la fixation du dispositif au format réduit dans cette cavité.

En se reportant à la figure 5, la cavité 110 est percée dans toute l'épaisseur du support 100 sans fond.

Une telle cavité 110 peut être usinée et/ou injectée selon des techniques connues.

La cavité 110 présente une forme dissymétrique donnée qui est complémentaire de la forme donnée au corps de la mini-carte PLUG 3G 60. Dans l'exemple illustré sur la figure 5, la forme dissymétrique est constituée d'une paroi concave 130 opposée à une paroi en forme de pointe dissymétrique 140.

Une telle dissymétrie complémentaire dans les formes de la mini-carte 60 et de la cavité 110 du support 100 permet d'obtenir le maintien de la mini- carte 60 dans la cavité 110 du support 100 par pincement de ladite carte entre les parois de la cavité 110.

Les formes dissymétriques sont obtenues par injection et/ou découpe, par exemple, ou par toute autre technique adaptée.

## Revendications

1. Adaptateur pour une carte à puce (60), la carte ayant des dimensions réduites en longueur et largeur par rapport aux dimensions d'une carte à puce au format mini-SIM et comprenant un microcircuit (10) présentant des plages de contact (11), l'adaptateur comprenant:
- un premier support (100)
- qui a les dimensions d'un corps de carte à puce au format mini-SIM et
- qui est muni d'une cavité (110)
- ayant des dimensions aptes à recevoir la carte à puce au format réduit (60) et
- localisée sur le premier support (100) à une position telle que l'emplacement des plages de contact (11) de la carte à puce au format réduit (60) reportée dans la cavité (110) coïncide avec celui des plages de contact d'une carte à puce au format mini-SIM afin de permettre l'établissement d'un contact électrique entre la carte à puce au format réduit et un circuit d'exploitation extérieur pour cartes à puce au format mini-SIM,
- un second support (200) qui a les dimensions d'un corps de carte à puce au format ISO,
**caractérisé en ce que** la cavité (110) est percée dans toute l'épaisseur du premier support (100) et présente une forme dissymétrique complémentaire de la forme dissymétrique de la carte à puce au format réduit (60) permettant à cette dernière d'y être maintenue par son pincement entre les parois de la cavité (110), et
**en ce que** le premier support (100) définit une portion interne du second support (200) délimitée par une prédécoupe (20)
- qui se présente sous la forme d'une fente discontinue (20) interrompue par des bretelles (22, 24, 26) dont la rupture permet la séparation du premier support (100), et
- qui est localisée sur le second support (200) à une position telle que l'emplacement de plages de contact (11) de la carte à puce au format réduit (60) reportée dans la cavité (110) du premier support (100) relié au second support (200) par les bretelles (22, 24, 26) coïncide avec celui des plages de contact d'une carte à puce au format ISO afin de permettre l'établissement d'un contact électrique entre la carte à puce au format réduit (60) et un circuit d'exploitation extérieur pour cartes à puce au format ISO.

2. Adaptateur selon la revendication 1, **caractérisé en ce que** la cavité (110) comporte au moins une paroi concave (130).

3. Adaptateur selon l'une des revendications 1 et 2, **caractérisé en ce que** la cavité (110) est adaptée pour une carte à puce (60) au format PLUG 3G.

4. Système de carte à puce comprenant, d'une part un adaptateur conforme à l'une des revendications 1 à 3, et, d'autre part, maintenue dans la cavité (110), une carte à puce au format réduit (60) ayant une épaisseur conforme à celle d'une carte à puce au format mini-SIM ou ISO.

5. Procédé de fabrication d'un adaptateur, comprenant les étapes suivantes :
- réalisation d'un support (200) ayant les dimensions d'un corps de carte à puce au format ISO,
- réalisation, dans le support (200), d'une délimitation d'une portion interne (100) aux dimensions d'un corps de carte à puce au format mini-SIM, et
- réalisation, dans la portion interne (100), d'une cavité (110) aux dimensions d'une carte à puce (60) ayant des dimensions réduites en longueur et largeur par rapport aux dimensions d'une carte à puce au format mini-SIM,
la cavité (110) étant localisée sur le support (200) à une position telle que, lorsqu'une carte à puce au format réduit (60) est reportée dans la cavité (110), l'emplacement des plages de contact (11) de la carte à puce au format réduit (60) coïncide avec celui des plages de contact d'une carte à puce au format ISO, et
la délimitation de la portion interne (100) étant localisée sur le support (200) à une position telle que, lorsque la portion interne (100) est séparée du support (200), l'emplacement des plages de contact (11) d'une carte à puce au format réduit (60) reportée dans la cavité (110) coïncide avec celui des plages de contact d'une carte à puce au format mini-SIM,
**caractérisé en ce que** la délimitation de la portion interne (100) dans le support (200) est réalisée par une prédécoupe (20) ayant la forme d'une fente discontinue interrompue par des bretelles (22, 24, 26), et **en ce que** la cavité (110) est percée dans toute l'épaisseur de la portion interne (100).

6. Procédé de fabrication d'un adaptateur selon la revendication 5, **caractérisé en ce que** le support (200) est obtenu par moulage et la prédécoupe (20) est réalisée lors du moulage.

7. Procédé de fabrication d'un système de carte à puce, **caractérisé en ce qu'**il comprend les étapes suivantes :
- réalisation d'une carte à puce au format réduit par rapport à une carte à puce au format au format mini-SIM ,
- réalisation d'un adaptateur selon un procédé conforme à l'une des revendications 5 et 6,
- report de la carte à puce au format réduit (60) dans la cavité (110) de l'adaptateur.

## Claims

1. An adaptor for a chip card (60), with the card having dimensions reduced in length and width with respect to the dimensions of a chip card in the mini-SIM format and including a microcircuit (10) having contact pads (11), with the adaptor including:
- a first support (100)
- having the dimensions of the body of a chip card in the mini-SIM format and
- which is provided with a cavity (110)
- having such dimensions as to be able to receive the chip card in the reduced format (60) and
- located on the first support (100) in such a position that the location of the contact pads (11) of the chip card in the reduced format (60) inserted into the cavity (110) coincides with that of the contact pads of a chip card in the mini-SIM format, so as to enable the creation of an electric contact between the chip card in the reduced format and an outer operation circuit for chip cards in the mini-SIM format,
- a second support (200) having the dimensions of the body of a chip card in the ISO format,
**characterized in that** the cavity (110) is drilled through the whole thickness of the first support (100) and has an asymmetrical shape matching the asymmetrical shape of the chip card in the reduced format (60) thus enabling the latter to be held there by the blocking thereof between the walls of the cavity (110), and
**in that** the first support (100) defines an inner portion of the second support (200) delimited by a score (20)
- which appears as a discontinuous slot (20) broken par links (22, 24, 26), the breaking of which enables the separation of the first support (100), and
- which is located on the second support (200) in such a position that the location of the contact pads (11) of the chip card in the reduced format (60) inserted into the cavity (110) of the first support (100) connected to the second support (200) by the links (22, 24, 26) coincides with that of the contact pads of a chip card in the ISO format, so as to enable the creation of an electric contact with the chip card in the reduced format (60) and an outer operation circuit for chip cards in the ISO format.

2. An adaptor according to claim 1, **characterized in that** the cavity (110) includes at least one concave wall (130).

3. An adaptor according to one of claims 1 and 2, **characterized in that** the cavity (110) is adapted to a chip card (60) in the PLUG 3G format.

4. A chip card system including, on the one hand, an adaptor according to one of claims 1 to 3, and, on the other hand, held in the cavity (110), a chip card in the reduced format (60) with a thickness complying with that of a chip card in the mini-SIM or ISO formats.

5. A method for producing an adaptor, including the following steps:
- production of a support (200) having the dimensions of the body of a chip card in the ISO format,
- production, in the support (200) of a delimitation of an inner portion (100) with the dimensions of the body of a chip card in the mini-SIM format, and
- production, in the inner portion (100), of a cavity (110) in the dimensions of the chip card (60) having reduced dimensions in length and width with respect to the dimensions of a chip card in the mini-SIM format,
with the cavity (110) being located in a position on the support (200) such that, when a chip card in the reduced format (60) is inserted into the cavity (110), the location of the contact pads (11) of the chip card in the reduced format (60) coincides with that of the contact pads of a chip card in the ISO format, and
with the delimitation of the inner portion (100) being located in a position on the support (200) such that, when the inner portion (100) is separated from the support (200), the location of the contact pads (11) of a chip card in the reduced format (60) inserted into the cavity (110) coincides with that of the contact pads of a chip card in the mini-SIM format,
**characterized in that** the delimitation of the inner portion (100) in the support (200) is carried out by a score (20) having the shape of a discontinuous slot broken by links (22, 24, 26) and **in that** the cavity (100) is drilled through the whole thickness of the inner portion (100).

6. A method for producing an adaptor according to claim 5, **characterized in that** the support (200) is obtained by moulding and the scoring (20) is carried out during moulding.

7. A method for producing a chip card system, **characterized in that** it includes the following steps:
- production of a chip card in the reduced format with respect to a chip card in the mini-SIM format;
- production of an adaptor according to a method according to one of claims 5 and 6,
- insertion of the chip card in the reduced format (60) into the cavity (110) of the adaptor.

## Patentansprüche

1. Adapter für eine Chipkarte (60), wobei die Karte in Bezug auf die Abmessungen einer Chipkarte im Format Mini-SIM länger und breiter ist, und eine Mikroschaltung (10) mit Kontaktflächen (11) aufweist, wobei der Adapter umfasst:
- einen ersten Träger (100)
- der die Abmessungen eines Chipkartenkörpers im Format Mini-SIM hat, und
- der mit einer Vertiefung (110) ausgestattet ist,
- die Abmessungen aufweist für die Aufnahme der Chipkarte im reduzierten Format (60), und
- die auf dem ersten Träger (100) in einer derartigen Position angeordnet ist, dass der Sitz der Kontaktbereiche (11) der Chipkarte im reduzieren Format (60) in der Vertiefung (110) mit demjenigen der Kontaktbereiche einer Chipkarte im Format Mini-SIM übereinstimmt, um die Herstellung eines Kontakts zwischen der Chipkarte im reduzierten Format und einer externen Betriebsschaltung für Chipkarten im Format Mini-SIM zu ermöglichen,
- einen zweiten Träger im Format ISO,
**dadurch gekennzeichnet, dass** die Vertiefung (110) durch die gesamte Dicke des ersten Trägers (100) verläuft und eine asymmetrische Form aufweist, die die asymmetrische Form der Chipkarte im reduzierten Format (60) ergänzt, was der letzteren gestattet, durch ihr Einklemmen zwischen den Wänden der Vertiefung (110) festgehalten zu werden, und
dass der erste Träger (100) einen internen Abschnitt des zweiten Trägers (200) definiert, der durch eine Vorstanzung (20) abgegrenzt ist,
- die in Form eines diskontinuierlichen Schlitzes (20) vorliegt, unterbrochen durch Stege (22, 24, 26), deren Bruch das Abtrennen des ersten Trägers (100) ermöglicht, und
- die auf dem zweiten Träger (200) in einer derartigen Position angeordnet ist, dass der Sitz der Kontaktflächen (11) der Chipkarte im reduzierten Format (60) in der Vertiefung des ersten Trägers (100), verbunden mit dem zweiten Träger (200) über die Stege (22, 24, 26), mit demjenigen der Kontaktflächen einer Chipkarte im Format ISO übereinstimmt, um die Herstellung eines elektrischen Kontakts zwischen der Chipkarte im reduzierten Format (60) und einer externen Betriebsschaltung für Chipkarten im Format ISO herzustellen.

2. Adapter gemäß Anspruch 1, **dadurch gekennzeichnet, dass** die Vertiefung (110) mindestens eine konkave Wand (130) aufweist.

3. Adapter gemäß einem der Ansprüche 1 und 2, **dadurch gekennzeichnet, dass** die Vertiefung (110) geeignet ist für eine Chipkarte (60) im Format PLU 3G.

4. Chipkartensystem mit einerseits einem Adapter gemäß einem der Ansprüche 1 bis 3 und andererseits festgehalten in der Vertiefung (110), wobei eine Chipkarte im reduzierten Format (60) eine Dicke aufweist, die derjenigen einer Chipkarte im Format Mini-SIM oder ISO entspricht.

5. Herstellungsverfahren eines Adapters mit den folgenden Schritten:
- Herstellung eines Trägers (200) mit den Abmessungen eines Chipkartenkörpers im Format ISO,
- Herstellung, im Träger (200), einer Abgrenzung eines internen Abschnitts (100) mit den Abmessungen eines Chipkartenkörpers im Format Mini-SIM, und
- Herstellung, im internen Abschnitt (100), einer Vertiefung (110) mit den Abmessungen einer Chipkarte (60) mit im Verhältnis zu den Abmessungen einer Chipkarte im Format Mini-SIM kleineren Längen- und Breitenabmessungen,
wobei die Vertiefung (110) auf dem Träger (200) in einer derartigen Position angeordnet ist, dass wenn der interne Abschnitt (100) vom Träger (200) getrennt ist, der Sitz der Kontaktflächen (11) einer Chipkarte im reduzierten Format (60) in der Vertiefung (110) mit demjenigen der Kontaktflächen einer Chipkarte im Format Mini-SIM übereinstimmt,
**dadurch gekennzeichnet, dass** die Abgrenzung des internen Abschnitts (100) im Träger (200) anhand einer Vorstanzung (20) in Form eines diskontinuierlichen Schlitzes, unterbrochen von Stegen (22, 24, 26), realisiert ist, und dass die Vertiefung (110) durch die gesamte Dicke des internen Abschnitts (100) verläuft.

6. Herstellungsverfahren eines Adapters gemäß Anspruch 5, **dadurch gekennzeichnet, dass** der Träger (200) durch Formerei erhalten wird und die Vorstanzung (20) während des Formens entsteht.

7. Herstellungsverfahren eines Chipkartensystems, **dadurch gekennzeichnet, dass** es die folgenden Schritte aufweist:
- Herstellung einer Chipkarte im reduzierten Format in Bezug auf eine Chipkarte im Format Mini-SIM,
- Herstellung eines Adapters nach einem Verfahren gemäß einem der Ansprüche 5 und 6,
- Einsetzen der Chipkarte im reduzierten Format (60) in die Vertiefung (110) des Adapters.
